Europäisches Patentamt

European Patent Office

Office européen des brevets

(19)

(11) Numéro de publication: **0 045 248**
**B1**

(12) **FASCICULE DE BREVET EUROPEEN**

(45) Date de publication du fascicule du brevet:
23.01.85

(51) Int. Cl.⁴: **F 16 F 3/10**, F 16 F 15/04

(21) Numéro de dépôt: 81401173.0

(22) Date de dépôt: 22.07.81

(54) Support amortisseur de chocs et/ou vibrations.

(30) Priorité: 24.07.80 FR 8016354

(43) Date de publication de la demande:
03.02.82 Bulletin 82/5

(45) Mention de la délivrance du brevet:
23.01.85 Bulletin 85/4

(84) Etats contractants désignés:
AT BE CH DE GB IT LI LU NL SE

(56) Documents cités:
DE - C - 821 885
FR - A - 1 021 178
FR - A - 1 116 112
FR - A - 1 448 534
FR - A - 1 476 682
FR - A - 1 522 402
FR - A - 2 079 487
FR - A - 2 214 066
FR - A - 2 438 956
GB - A - 5 133
GB - A - 1 489 403
LU - A - 47 738
US - A - 1 855 253
US - A - 2 520 442
US - A - 3 831 923

(73) Titulaire: **Pineau, André Lucien, 12, rue de Béarn,
F-92210 Saint-Cloud (FR)**

(72) Inventeur: **Pineau, André Lucien, 12, rue de Béarn,
F-92210 Saint-Cloud (FR)**

(74) Mandataire: **Weinstein, Zinovi et al, Cabinet Z.
WEINSTEIN 20, Avenue de Friedland, F-75008 Paris (FR)**

BUNDESDRUCKEREI BERLIN

## Description

La présente invention se rapporte d'une manière générale à un support amortisseur agencé entre un élément porteur et un élément porté.

Elle concerne plus particulièrement un support amortisseur de chocs et/ou de vibrations ayant un faible encombrement destiné d'une part à supporter une charge, et d'autre part à encaisser des impulsions et accélérations dans toutes les directions, et ce, quelles que soient leurs durées.

On connaît déjà des supports élastiques destinés à l'amortissement simultané de chocs et de vibrations tels que ceux décrits par exemple dans le brevet français FR-A-2 079 487, appartenant au demandeur, et dans lequel, sont prévues notamment des membranes élastiquement déformables.

Ces appareils ont une efficacité multidirectionnelle excellente pour les vibrations. Leur capacité d'absorption des chocs est bonne suivant l'axe vertical, en raison de la course importante résultant de l'interaction des deux membranes. Par contre, l'amortissement des chocs latéraux est relativement faible, du fait de la course horizontale limitée par rapport à l'axe central de l'amortisseur.

On connaît d'autre part des supports élastiques destinés à l'amortissement simultané des chocs et des vibrations, et qui utilisent un ressort. Ces supports sont en général constitués par deux éléments métalliques coulissant l'un dans l'autre et entre lesquels est interposé ledit ressort.

Le document GB-A-1 489 403 décrit un support amortisseur de chocs et vibrations comportant deux membranes élastiquement déformables présentant une forme de coupelle, et un organe élastiquement déformable suivant une direction quelconque agencé dans des alésages des membranes.

Toutefois, les différents supports amortisseurs connus jusqu'à présent, présentent un certain nombre d'inconvénients. En effet, si leur capacité d'absorption des chocs est bonne suivant l'axe vertical, leur efficacité aux chocs latéraux est relativement faible du fait d'une course horizontale très limitée. En outre, la mise en série de plusieurs membranes coulissant sur un axe vertical fixe, disposition très favorable pour l'amortissement de chocs verticaux, est impossible suivant le plan horizontal. Par ailleurs, la recherche d'une course latérale importante sur une seule membrane porteuse exigerait des dimensions excessives et, imcompatibles avec des encombrements limités.

Par conséquent, au total, il est difficile d'obtenir une capacité d'absorption des chocs latéraux qui soit bonne, sans avoir une course latérale importante. Et cela est d'autant plus difficile que la course est faible car, à la limite, si la course est nulle il ne peut exister d'amortissement.

La présente invention a donc pour but de pallier les inconvénients précités en proposant un support amortisseur particulièrement performant en ce qu'il permet d'obtenir une efficacité d'amortissement multidirectionnel excellente pour les chocs et les vibrations et notamment un amortissement important aux chocs latéraux, et cela, dans un encombrement extrêmement faible.

A cet effet, l'invention a pour objet un support amortisseur de chocs et/ou de vibrations entre un élément porteur et un élément porté, du type comprenant au moins une membrane élastiquement déformable disposée entre l'élément porteur et l'élément porté de manière que son axe de symétrie soit sensiblement orthogonal aux surfaces des éléments porteur et porté, chaque membrane présentant une forme de coupelle ou analogue, et un organe élastiquement déformable suivant une direction quelconque étant agencé à l'intérieur de la membrane, caractérisé en ce que ladite membrane comporte une ouverture dans laquelle passe ledit organe élastiquement déformable dont une extrémité est solidaire de l'élément porteur ou de l'élément porté, ladite ouverture ménagée dans la membrane permettant un agencement de l'organe déformable suivant l'axe de symétrie de celle-ci; de préférence ladite ouverture est à un diamètre tel qu'elle soit en contact de frottement avec la surface extérieure de l'organe élastiquement déformable.

De préférence, l'ouverture précitée présente un diamètre légèrement inférieur au diamètre extérieur de l'organe déformable.

Selon une autre caractéristique de l'invention, l'organe déformable, agencé suivant l'axe de symétrie des membranes, est constitué par au moins un ressort.

On comprend donc que la nouveauté et l'originalité du support amortisseur selon l'invention résident essentiellement dans la prévision d'un ressort qui est monté de manière traversante suivant l'axe de symétrie des membranes, de façon à conférer à l'ensemble toute l'élasticité voulue dans une direction quelconque et avantageusement suivant une direction latérale.

Selon une autre caractéristique de l'invention le ressort précité traverse trois membranes superposées en forme de coupelle ou analogue, en passant dans des ouvertures ménagées dans lesdites membranes, et présentant un diamètre légèrement inférieur au diamètre extérieur du ressort précité, les deux premières membranes présentant leur concavité en vis-à-vis, et la troisième présentant sa concavité tournée vers l'extérieur.

Suivant encore une autre caratéristique de l'invention une pièce de centrage solidaire de l'élément porté est interposée entre les deux premières membranes précitées, tandis que la troisième membrane est solidaire d'une pièce de centrage de l'élément porteur.

Suivant encore une autre caractéristique, les deux extrémités du ressort précité traversant les membranes sont montées respectivement sur une pièce solidaire de l'élément porteur, et sur une platine venant en butée sur l'une des deux premières membranes précitées.

En vue d'obtenir un meilleur serrage des extrémités du ressort précité, on prévoit encore selon d'autres caractéristiques de l'invention, deux axes respectivement solidaires de la pièce précitée et de la platine précitée, ces axes présentant un filetage externe à pas correspondant à celui du ressort.

Pour augmenter les possibilités de flexion latérale du ressort dans sa limite élastique, la pièce solidaire de l'élément porteur comporte avantageusement une etrémité libre de forme sensiblement parabolique.

Suivant encore une autre caractéristique de l'invention, le montage d'au moins l'une des extrémités du ressort s'effectue par vissage dans une pièce femelle solidaire de l'élément porteur et/ou de la platine précitée, le filetage et le pas des filets de cette pièce femelle formant écrou correspondant sensiblement au diamètre et au pas du ressort.

On ajoutera encore que suivant l'invention, l'organe déformable peut être constitué par deux ressorts concentriques ou bien par un ressort métallique de forme hyperbolique, ou bien encore peut être au moins en partie enrobé dans une bague élastiquement déformable.

L'invention vise également un assemblage d'au moins un élément porté à un élément porteur par l'intermédiaire d'au moins un support amortisseur répondant aux caractéristiques susmentionnées.

Un tel support amortisseur appliqué à l'assemblage d'au moins un élément porté à un élément porteur, présente de nombreux avantages tels que notamment:

— un excellent amortisseur des chocs et des vibrations suivant une direction quelconque, et notamment des chocs latéraux dans un encombrement minimum,
— le maintien en permanence de la charge à supporter.

D'autres caractéristiques et avantages de l'invention apparaîtront mieux dans la description détaillée qui suit et qui se réfère aux dessins annexés donnés uniquement à titre d'exemple et dans lesquels:

La figure 1 est une vue en coupe suivant l'axe de symétrie du support amortisseur selon l'invention; et

La figure 2 est une vue partielle en coupe suivant l'axe de symétrie d'un deuxième mode de réalisation d'un support amortisseur selon l'invention.

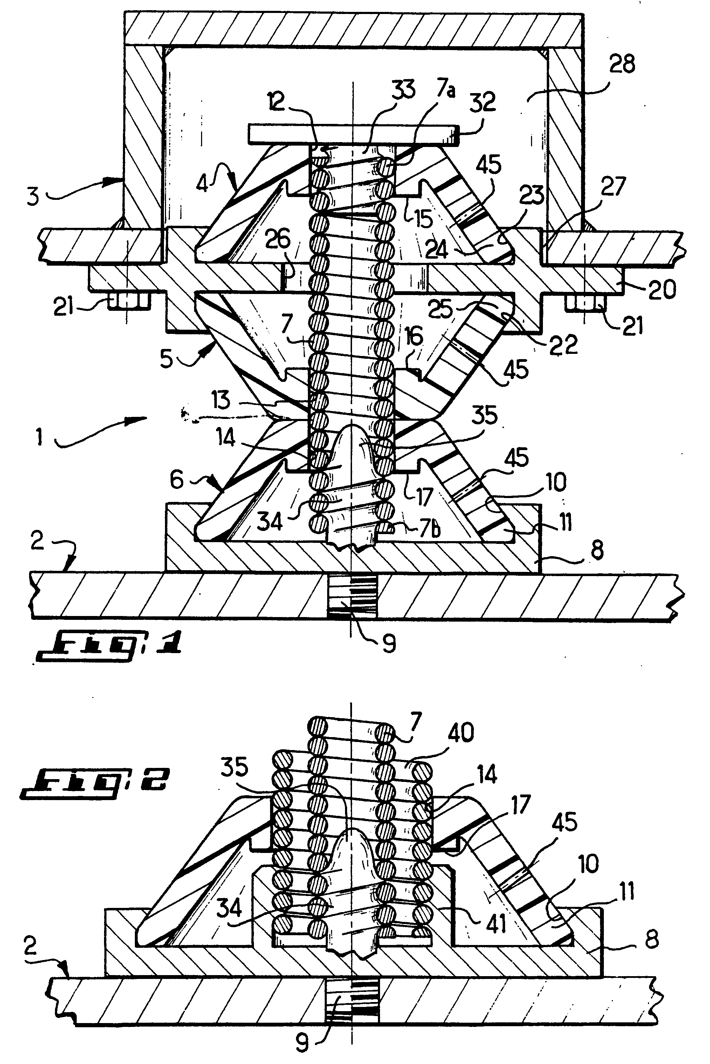

Suivant un exemple de réalisation, et en se reportant plus particulièrement à la figure 1, un support amortisseur 1 conforme à l'invention disposé entre un élément porteur 2 et un élément porté 3 comprend trois membranes 4, 5, 6 élastiquement déformables, traversées par un organe élastiquement déformable suivant une direction quelconque et qui est un ressort métallique 7, lequel ressort pourrait être en tout autre matériau, du moment que celui-ci soit élastiquement déformable suivant une direction quelconque. Plus précisément, les deux premières membranes 4 et 5 présentent leur concavité en vis-à-vis, et la troisième membrane 6 adjacente à la membrane 5 par sa partie 6a présente une concavité tournée vers l'extérieur.

Suivant l'exemple de réalisation représenté sur la figure 1, une pièce de centrage 8 solidaire de l'élément porteur 2, par exemple en étant vissée sur celui-ci au moyen d'une partie mâle filetée 9, comporte dans sa partie périphérique annulaire un logement 10 destiné à recevoir la partie extérieure 11 de la troisième membrane 6. Les membranes 4, 5 et 6 ont avantageusement une forme de coupelle ou analogue dont le centre est muni d'ouvertures respectives 12, 13 et 14 qui présentent un diamètre légèrement inférieur au diamètre extérieur du ressort 7. En d'autres termes, le diamètre des ouvertures 12, 13, 14 doit être tel que ces ouvertures soient en contact de frottement avec la surface extérieure des spires du ressort 7. Chaque membrane 4, 5 et 6 traversée par le ressort 7, présente dans sa zone de contact 12, 13, 14 avec le ressort 7 une partie cylindrique 15, 16, 17 venue de moulage avec le reste de la membrane. Le diamètre intérieur de chaque partie cylindrique 15, 16, 17 est tel qu'il assure un frottement entre le ressort 7 lorsqu'il y a mouvement relatif entre le ressort 7 et les membranes 4, 5 et 6.

D'autre part, la pièce de centrage 20 solidaire de l'élément porté 3 au moyen de vis 21 comporte au voisinage de sa périphérie et sur chaque face, un logement annulaire 23 destiné à recevoir la partie extérieure périphérique 24 de la membrane 4, et un logement annulaire 22 destiné à recevoir la partie extérieure périphérique 25 de la membrane 5.

Il est à noter que la fonction réalisée par les logements annulaires 23, 22 et 10 consiste uniquement à maintenir rigidement la périphérie annulaire 24, 25 et 11 des membranes 4, 5 et 6. La réalisation de ces logements peut être évidemment quelconque pour s'adapter de façon appropriée à la forme du rebord annulaire externe des membranes.

En outre, l'élément de centrage 20 comporte une ouverture 26 qui permet un déplacement libre du ressort 7 sous l'effet de contraintes latérales. Cette pièce de centrage 20 comporte avantageusement un épaulement 27 centré dans un évidement 28 de l'élément porté 3 de façon à mieux supporter les efforts latéraux. L'évidement 28 de l'élément porté 3 a une profondeur telle qu'elle permet la libre déformation de la membrane 4 et du ressort 7 sous l'action d'un choc suivant l'axe vertical.

Les extrémités 7a et 7b du ressort 7 sont montées respectivement sur une pièce 33 solidaire d'une platine 32 venant en butée sur la membrane 4, et sur une pièce 34 solidaire de la pièce de centrage 8. Les pièces 33 et 34 ont la forme d'un axe présentant un filetage externe à pas correspondant à celui du ressort 7. L'extrémité libre et lisse 35 de la pièce filetée 34 a une forme sensiblement parabolique répartissant l'effort à la sortie de la pièce filetée 34, évitant ainsi une concentration localisée de contrainte juste après le dernier pas du filetage.

Suivant un deuxième mode de réalisation, et comme il apparaît sur la figure 2, on prévoit à la place du seul ressort 7, deux ressorts concentriques 7 et 40. Le ressort 40 est vissé dans une pièce femelle 41 formant écrou, tandis que le ressort 7 est vissé sur la pièce filetée 34 solidaire de la pièce de centrage 8.

A ce propos, lorsque le dispositif ne comporte qu'un seul ressort, comme cela est décrit dans le premier mode de réalisation illustré à la figure 1, la fixation du ressort 7 peut être obtenue au moyen soit par vissage sur une pièce telle que 34 solidaire de la pièce 8, soit par vissage à l'intérieur d'une pièce telle que 41 formant écrou solidaire de la pièce 8. Il en est de même pour la fixation de l'extrémité 7a du ressort 7 sur la platine 32. Avantageusement, le filetage et le pas du filet de la partie femelle 41 formant écrou correspondent sensiblement au diamètre et au pas du ressort utilisé.

Comme il apparaît sur la figure 2, l'ouverture 14 de la membrane 6 a un diamètre légèrement inférieur au diamètre extérieur du ressort 40. Il en est de même pour les membranes 4 et 5.

Dans les modes de réalisation des figures 1 et 2, les membranes sont réalisées en élastomère à haute hystérésis. Les figures 1 et 2 illustrant le support amortisseur, montrent des membranes identiques, mais il est bien entendu que chaque membrane peut avoir une forme différente l'une de l'autre pour répondre à des caractéristiques d'amortissement données. De plus, chaque membrane comprend un orifice 45 permettant à l'air de s'échapper lors de la déformation de la membrane.

Le fonctionnement du dispositif support amortisseur conforme à la présente invention sera décrit ci-dessous en se référant aux amortissements des vibrations et des chocs suivant l'axe vertical et l'axe horizontal.

### 1) Amortissement des vibrations suivant l'axe vertical

Les impulsions provenant de l'élément porteur 2 sont transmises par l'intermédiaire de la pièce de centrage 8 au ressort 7 par l'axe 34 et à la membrane 6. La membrane 6 se déforme sous l'impulsion reçue en absorbant une partie de l'énergie par hystérésis interne et par frottement sur le ressort 7. Elle transmet l'impulsion résiduelle à la membrane 5 solidaire de l'élément porté 3 par la pièce de centrage 20. Cette membrane 5 se déforme alors, entraînant la pièce de centrage 20 et la membrane 4, qui ajoute à son tour aux effets des membranes 6 et 5 son propre hystérésis et son frottement sur le ressort 7.

L'ensemble conduit à l'amortissement vibratoire souhaité, permettant ainsi une excellente réponse, tant en ce qui concerne le coefficient d'amplification à la résonance que l'atténuation aux fréquences élevées.

### 2) Amortissement des vibrations suivant l'axe horizontal

Pour les mêmes raisons que celles déjà exposées au paragraphe 1 ci-dessus, les membranes 4, 5, 6 se déforment sous les impulsions horizontales provenant de la structure. L'énergie dépensée dans la déformation de ces membranes, jointe au frottement résultant du déplacement relatif des deux membranes par rapport au ressort 7, assure l'amortissement vibratoire recherché. Les impulsions vibratoires étant toujours d'une intensité en g et d'une durée en millisecondes faibles, le ressort 7, dont la raideur latérale est très grande, n'a qu'un déplacement latéral très faible, de second ordre par rapport au déplacement des membranes.

### 3) Amortissement des chocs suivant l'axe vertical

Les membranes 6 et 5 se déforment sous l'effet d'un choc vertical provenant de l'élément porteur 2. Cette déformation, d'autant plus importante que l'intensité et la durée des chocs sont plus élevées, tend à diminuer momentanément, pour chacune des membranes 6 et 5, le diamètre de la partie cylindrique 17 et 16 respectivement au contact du ressort 7. Il en résulte à ce moment un accroissement important du frottement des membranes 6 et 5 sur le ressort 7. L'énergie de frottement ainsi dépensée s'ajoutant à l'énergie dissipée par hystérésis dans le mouvement des membranes 6 et 5, conduit à un amortissement très efficace de l'énergie libérée par le choc. Pendant cette course verticale de haut en bas dûe à l'impulsion de choc, le ressort 7 à spires jointives reste immobile du fait que les spires prennent appui l'une sur l'autre. L'énergie résiduelle dans l'ensemble du système provoque un choc en retour tendant à faire mouvoir vers le haut l'élément porté 3. La membrane 4 supporte alors à son tour une contraction dans sa partie centrale 15 enserrant le ressort 7, suivant le processus décrit plus haut. A la déformation de la membrane 4 s'ajoute alors une brève extension élastique verticale de bas en haut du ressort 7, dont les spires cessent alors momentanément d'être jointives. Bien entendu, la courbe de déformation du ressort 7 est prévue de façon telle que les efforts causés par le mouvement dynamique de la charge supportée par l'élément porté 3 soient de second ordre par rapport à l'effort nécessaire pour causer une déformation permanente du ressort 7. L'auto-rappel des spires du ressort 7 ramène l'ensemble en position initiale et le cycle se répète, s'il y a lieu, jusqu'à absorption totale de l'effort provenant du choc vertical.

### 4) Amortissement des chocs suivant l'axe horizontal

En reprenant l'hypothèse d'une impulsion de choc provenant de l'élément porteur 2, cette impulsion se propage à l'élément porté 3 par l'intermédiaires des organes de liaison constitués par les membranes déformables 6, 5 et 4, et par le ressort 7. Si le choc est important en intensité et en durée, par exemple de plusieurs dizaines de g et d'une durée de l'ordre de 10 millisecondes, l'inertie de la masse suspendue de l'élément porté 3 entraîne, non seulement la déformation des membranes telle qu'elle est décrite dans le paragraphe 2 (amortissement des vibrations horizontales), mais provoque momentanément une déformation latérale du ressort 7 à partir de l'élément de centrage 8 solidaire de l'élément porteur 2. La rigidité horizontale du ressort 7 est prévue de façon telle que le déplacement latéral reste compatible avec des débattements admissibles déterminés suivant une hypothèse donnée. La déformation du ressort 7 s'accompagne, comme dans les mouvements précédemment décrits, d'une déformation correspondante des membranes 5 et 6, provoquant un accroissement de frottement sur la partie en contact avec le ressort 7, et apportant ainsi le complément d'amortissement recherché.

Bien entendu, la coure de déformation latérale du ressort 7 doit être telle que les efforts résultant des chocs latéraux ne provoquent pas de rupture ni de déformation permanente pouvant résulter d'un allongement par dépassement de la limite élastique. Lorsque l'effort pertubateur cesse, le rappel élastique du ressort 7 ramène l'ensemble dans la position d'origine, prête à recevoir de nouvelles impulsions.

On a donc réalisé suivant l'invention un dispositif support amortisseur remplissant une double fonction: amortissement des vibrations et amortissement des chocs suivant les trois axes de l'espace.

La présente invention n'est nullement limitée aux modes de réalisation décrits et illustrés qui n'ont été donnés qu'à titre d'exemple.

C'est ainsi que l'organe élastiquement déformable traversant les membranes peut être réalisé sous la forme d'un ou plusieurs ressorts à spires jointives ou non ou à extrémité de forme hyperbolique. Dans le cas d'un ressort double comme illustré à la figure 2, le pas de chaque ressort peut être orienté dans le même sens ou dans le sens contraire, tout en étant à spires jointives, sans sortir du cadre de l'invention.

De même, sans non plus sortir du cadre de l'invention, le ou les ressorts précités peuvent être au moins en partie enrobés dans un élément élastiquement déformable de façon à jouer le même rôle que les membranes précitées.

### Revendications

1. Support amortisseur de chocs et/ou de vibrations entre un élément porteur (2) et un élément porté (3), du type comprenant au moins une membrane élastiquement déformable (4, 5, 6) disposée entre l'élément porteur et l'élément porté de manière que son axe de symétrie soit sensiblement orthogonal aux surfaces des éléments porteur et porté, chaque membrane présentant une forme de coupelle ou analogue, et un organe élastiquement déformable (7) suivant une direction quelconque étant agencé à l'intérieur de la membrane, caractérisé en ce que chaque membrane (4, 5, 6) comporte une ouverture (12, 13, 14) dans laquelle passe ledit organe (7) élastiquement déformable dont une extrémité est solidaire de l'élément porteur ou de l'élément porté, ladite ouverture (12, 13, 14) ménagée dans la membrane permettant un agencement de l'organe déformable suivant l'axe de symétrie de celle-ci; de préférence ladite ouverture ayant un diamètre tel qu'elle soit en contact de frottement avec la surface extérieure de l'organe (7) élastiquement déformable.

2. Support amortisseur suivant la revendication 1, caractérisé en ce que l'ouverture précitée (12, 13, 14) présente un diamètre légèrement inférieur au diamètre extérieur de l'organe déformable (7).

3. Support suivant la revendication 1 ou 2, caractérisé en ce que l'organe déformable, agencé suivant l'axe de symétrie des membranes (4, 5, 6), est constitué par au moins un ressort (7).

4. Support suivant l'unes des revendications 1 à 3, caractérisé en ce que le ressort 7 précité traverse trois membranes superposées (4, 5, 6) en forme de coupelles ou analogue, en passant dans des ouvertures (12, 13, 14) ménagées dans lesdites membranes, et présentant un diamètre légèrement inférieur au diamètre extérieur du ressort (7) précité, les deux premières membranes (4, 5) présentant leur concavité en vis-à-vis, et la troisième présentant une concavité tournée vers l'extérieur.

5. Support suivant l'une des revendications précédentes, caractérisé en ce qu'une pièce de centrage (20) solidaire de l'élément porté (3), est interposée entre les deux premières membranes (4, 5) précitées, tandis que la troisième membrane (6) est solidaire d'une pièce de centrage (8) de l'élément porteur (2).

6. Support suivant l'une des revendications précédentes caractérisé en ce que les deux extrémités (7a, 7b) du ressort (7) précité traversant les membranes (4, 5, 6) sont montées respectivement sur une pièce (34) solidaire de l'élément porteur (2), et sur une platine (32) venant en butée sur l'une (4) des deux premières membranes précitées (4, 5).

7. Support suivant la revendication 6, caractérisé en ce que la pièce précitée est un axe (34) présentant un filetage externe à pas correspondant à celui du ressort (7) et comportant une extrémité libre (35) de forme sensiblement parabolique.

8. Support suivant la revendication 6, caractérisé en ce que la platine précitée (32) comporte un axe (33) fileté, sur lequel vient se visser le ressort (7), le filetage et le pas des filets correspondant sensiblement au diamètre et au pas du ressort (7).

9. Support suivant l'une des revendications précédentes 1 à 6, caractérisé en ce que le montage d'au moins l'une des extrémités du ressort (40) s'effectue par vissage dans une pièce femelle (41) solidaire de l'élément porteur (8) et/ou de la platine précitée (32), le filetage et le pas du filet de cette pièce femelle (41) formant écrou correspondant sensiblement au diamètre et au pas du ressort (40).

10. Support suivant l'une des revendications précédentes caractérisé en ce que l'organe déformable (7) précité est constitué par deux ressorts concentriques (7, 40).

11. Support suivant l'une des revendications précétées, caractérisé en ce que l'organe déformable précité (7) est constitué par un ressort métallique de forme hyperbolique.

12. Assemblage d'au moins un élément porté à un élément porteur par l'intermédiaire d'au moins un support amortisseur selon l'une des revendications 1 à 11.

## Patentansprüche

1. Stoß- und/oder schwingungsdämpfende Lagerstütze zwischen einem tragenden Element (2) und einem getragenen Element (3), derjenigen Bauart mit wenigstens einer elastisch verformbaren Membran (4, 5, 6) welche so zwischen dem tragenden Element und dem getragenen Element angeordnet ist, daß ihre Symmetrieachse im wesentlichen senkrecht zu den Flächen des tragenden und des getragenen Elements verläuft, wobei jede Membran eine napfförmige Gestalt oder dergleichen aufweist, und wobei ein in irgend einer Richtung elastisch verformbares Glied (7) innerhalb der Membran angeordnet ist, dadurch gekennzeichnet, daß jede Membran (4, 5, 6) eine Öffnung (12, 13, 14) aufweist, durch welche sich das besagte elastisch verformbare Glied (7) erstreckt, dessen eine Ende mit dem tragenden Element bzw. getragenen Element fest verbunden ist, wobei die besagte, in der Membran angeordnete Öffnung (12, 13, 14) eine entlang der Symmetrieachse derselben verlaufenden Anordnung des verformbaren Gliedes ermöglicht; wobei die besagte Öffnung vorzugsweise einen derartigen Durchmesser hat, daß sie in reibender Berührung mit der Außenfläche des elastisch verformbaren Gliedes (7) steht.

2. Dämpfende Lagerstütze nach Anspruch 1, dadurch gekennzeichnet, daß die vorgenannte Öffnung (12, 13, 14) einen etwas kleineren Durchmesser als der Außendurchmesser des verformbaren Gliedes (7) aufweist.

3. Lagerstütze gemäß Anspruch 1 oder 2, dadurch gekennzeichnet, daß das entlang der Symmetrieachse der Membranen (4, 5, 6) angeordnete verformbare Glied aus wenigstens einer Feder (7) besteht.

4. Lagerstütze nach einem der Ansprüche 1 bis 3, dadurch gekennzeichnet, daß die vorgenannte Feder (7) drei übereinander gelagerte Membrane (4, 5, 6) napfförmiger oder ähnlicher Gestalt durchsetzt in dem sie in den besagten Membranen angeordnete Öffnungen durchsetzt, welche einen etwas kleineren Durchmesser als der Außendurchmesser der vorgenannten Feder (7) aufweisen, wobei die zwei ersten Membrane (4, 5) mit ihren Konkavitäten einander zugewandt sind und die dritte Membran eine nach außen gewandte Konkavität aufweist.

5. Lagerstütze nach einem der vorangehenden Ansprüche, dadurch gekennzeichnet, daß ein mit dem getragenen Element (3) fest verbundenes Zentrierstück (20) zwischen den beiden ersten vorgenannten Membranen (4, 5) gefügt ist, während die dritte Membran (6) mit einem Zentrierstück (8) des tragenden Elementes (2) fest verbunden ist.

6. Lagerstütze nach einem der vorangehenden Ansprüche, dadurch gekennzeichnet, daß die beiden Enden (7a, 7b) der die Membrane (4, 5, 6) durchsetzenden Feder (7) jeweils an einem mit dem tragenden Element (2) festverbundenen Stück.(34) und an einer, an einer (4) der beiden ersten vorgenannten Membranen (4, 5) anstoßenden Halteplatte (32) angeordnet sind.

7. Lagerstütze nach Anspruch 6, dadurch gekennzeichnet, daß das vorgenannte Stück ein ein Außengewinde aufweisender Stift (34) ist, mit einer Steigung die derjenigen der Feder (7) entspricht und welcher ein im wesentlichen parabelförmiges freies Ende (35) aufweist.

8. Lagerstütze nach Anspruch 6, dadurch gekennzeichnet, daß die vorgenannte Halteplatte (32) einen Gewindezapfen (33) aufweist, auf welchem sich die Feder (7) aufschraubt, wobei das Gewinde und die Gewindesteigung im wesentlichen dem Durchmesser und dem Wicklungsschritt der Feder (7) entsprechen.

9. Lagerstütze nach einem der vorangehenden Ansprüche 1 bis 6, dadurch gekennzeichnet, daß das Anbringen von wenigstens einem der Enden der Feder (40) durch Verschrauben in ein mit dem tragenden Element (8) und/oder mit der vorgenannten Halteplatte (32) fest verbundenen Einsteckstück (41) erfolgt, wobei das Gewinde und die Gewindesteigung dieses eine Mutter bildenden Einsteckstücks (41) im wesentlichen dem Durchmesser und dem Wicklungsschritt der Feder (40) entsprechen.

10. Lagerstütze nach einem der vorangehenden Ansprüche, dadurch gekennzeichnet, daß das vorgenannte verformbare Glied (7) aus zwei konzentrischen Federn (7, 40) besteht.

11. Lagerstütze nach einem der vorangehenden Ansprüche, dadurch gekennzeichnet, daß das vorgenannte verformbare Glied (7) aus einer hyperbelförmigen Metallfeder besteht.

12. Zusammenbau von wenigstens einem getragenen Element mit einem tragenden Element über wenigstens einer dämpfenden Lagerstütze nach einem der Ansprüche 1 bis 11.

## Claims

1. A support for absorbing shocks and/or vibrations between a bearing element (2) and a borne element (3), of the type including at least one resiliently deformable membrane (4, 5, 6) arranged between the bearing element and the borne element in such a manner that its axis of symmetry is substantially orthogonal to the surfaces of the bearing and borne elements, each membrane being shaped like a cup or the like, and a member (7) resiliently deformable in any direction being arranged in the interior of the membrane, characterized in that each membrane (4, 5, 6) has an opening (12, 13, 14) in which passes the said resiliently deformable member (7) one end of which is connected to the bearing element or to the borne element, the said opening (12, 13, 14) provided in the membrane allowing an arrangement of the deformable member along the axis of symmetry thereof, the said opening preferably having such a diamter as to be in frictional contact with the outer surface of the resiliently deformable member (7).

2. A support according to claim 1, characterized in that the said opening (12, 13, 14) has a diameter slightly smaller than the outer diameter of the deformable member (7).

3. A support according to claim 1 or 2, characterized in that the deformable member arranged along the axis of symmetry of the membranes (4, 5, 6) is constituted by at least one spring (7).

4. A support according to one of claims 1 to 3, characterized in that the said spring (7) extends through three superposed membranes (4, 5, 6) shaped like cups or the like, by passing through openings (12, 13, 14) provided in the said membranes, and having a diameter slightly smaller than the outer diameter of the said spring (7), the first two membranes (4, 5) having their concavity opposite each other, and the third one having a concavity turned towards the outside.

5. A support according to one of the foregoing claims, characterized in that a centering component (20) connected to the borne element (3) is interposed between the said first two membranes (4, 5), whereas the third membrane (6) is connected to a centering component (8) associated with the bearing element (2).

6. A support according to one of the foregoing claims, characterized in that the two ends (7a, 7b) of the said spring (7) extending through the membranes (4, 5, 6) are mounted on a component (34) connected to the bearing element (2) and on plate (32) bearing upon one (4) of the said two first membranes (4, 5), respectively.

7. A support according to claim 6, characterized in that the said component (34) is a pin provided with a thread the pitch of which corresponds to that of the spring (7), and having a free end (35) of substantially parabolic shape.

8. A support according to claim 6, characterized in that the said plate (32) is provided with a threaded pin (33), onto which the spring (7) is screwed, the thread and the thread pitch corresponding substantially to the diameter and to the pitch of spring (7).

9. A support according to one of the foregoing claims 1 to 6, characterized in that the mounting of at least one of the ends of the spring (40) is effected by screwing into a female component (41) connected to the bearing element (2) and/or to the said plate (32), the thread and the thread pitch of this female component (41) constituting nut means corresponding substantially to the diameter and the pitch of the spring (40).

10. A support according to one of the foregoing claims, characterized in that the said deformable member (7) is constituted by two concentric springs (7, 40).

11. A support according to one of the foregoing claims, characterized in that the deformable member (7) is constituted by a metal spring of hyperbolic shape.

12. An assembly of at least one element borne by a bearing element through the medium of at least one shock and/or vibration absorbing support according to one of the claims 1 to 11.

0 045 248

Fig.1

Fig.2

9